# EUROPEAN PATENT APPLICATION

(11) **EP 1 635 015 A1**
(43) Date of publication of application: **15.03.2006**
(21) Application number: 04255441.0
(22) Date of filing: 08.09.2004
(51) Int. Cl.: E05B 53/00, F16C 1/26

(54) **End fitting for a cable**

(71) Applicant: ArvinMeritor Light Vehicle Systems (UK) Ltd, Birmingham, West Midlands, B30 3BW (GB)
(72) Inventor: Roussel, Jerome Pierre, 68000 Colmar (FR); Carrington, Paul, Halesowen, West Midlands B62 9TA (GB)
(74) Representative: Foot, Paul Matthew James

(57) **Abstract**

An end fitting (90) for a cable (58) for the axial transmission of an input or output movement to or from a moveable body relative to a fixed body (24a), the end fitting (90) having a pivot portion (76) spaced from a clip portion (82), the pivot portion (76) being engageable with a pivot region (39) of the fixed body to allow the end fitting (90) to rotate about the pivot portion (39) to so as to rotatably engage the clip portion (82) with a clip region (35) of the fixed body, thereby securing the cable (58) to the fixed body.

## Description

The present invention relates to an end fitting for a cable, particularly, but not exclusively for an end fitting of a Bowden cable used in relation to the control of vehicle door latches.

One example of the application of cable linkages for vehicles is in relation to light commercial vehicles such as panel vans (i.e. vans in which the load space is enclosed). These typically comprise a relatively large rear opening that is closeable by two rear doors hinged to the rear most edge of each side of the van. A latch is typically provided part way up the shut-face of one of the rear doors. The latch is arranged to latch with complementary striker provided on the shut face of the other of the rear doors when the doors are closed. Typically, the latch may also operate supplementary latches which are fitted to the upper and lower edges of the door to which the latch is fitted, via Bowden cable connections.

Often the cables have to be connected to a latch mechanism in the interior of the latch "blind" - i.e. with the latch mechanism enclosed within a housing except for the small opening through which the cable is inserted. This can make the assembly process difficult, time consuming and therefore costly and prone to error. In addition, it is often also difficult, if not impossible to disassemble the connection for maintenance without damaging the cable, fitting or latch.

The present invention seeks to overcome, or at least mitigate, the problems of the prior art.

Accordingly, one aspect of the present invention provides an end fitting for a cable for the axial transmission of an input or output movement to or from a moveable body relative to a fixed body, the end fitting having a pivot portion spaced from a clip portion, the pivot portion being engageable with a pivot region of the fixed body to allow the end fitting to rotate about the pivot portion to so as to rotatably engage the clip portion with a clip region of the fixed body, thereby securing the cable to the fixed body

Another aspect of the present invention provides a method of mounting a cable end fitting to a fixed body, the end fitting comprising a pivot portion spaced from a clip portion, the method comprising the steps of: a) engaging the pivot portion of the fitting with a complementary pivot region of the fixed body; b) pivoting the end fitting about the pivot portion; and c) engaging the clip portion with the clip region of the fixed body.

Embodiments of the present invention will now be described, by way of example only, with reference to the accompanying drawings in which:
FIGURE 1 is a view of a the rear doors of a van or light commercial vehicle illustrating an arrangement of a handle, latches, and connecting cables;
FIGURES 2A and 2B are an exploded view and assembled view of a prior art cable end fitting and the components to which it is secured;
FIGURES 3 and 4 are isometric views of a fitting of the present invention secured to a latch viewed from the latch interior;
FIGURE 5 is an isometric view of the fitting of Figure 3 viewed from the latch exterior;
FIGURE 6 is a partial cross-section through the latch of Figures 3 to 5 during assembly of the fitting thereto;
FIGURE 7 is a perspective view of another portion of the latch showing levers to which the cable is to be secured;
FIGURE 8 is a perspective view of the latch illustrating two fittings of the present invention in place.

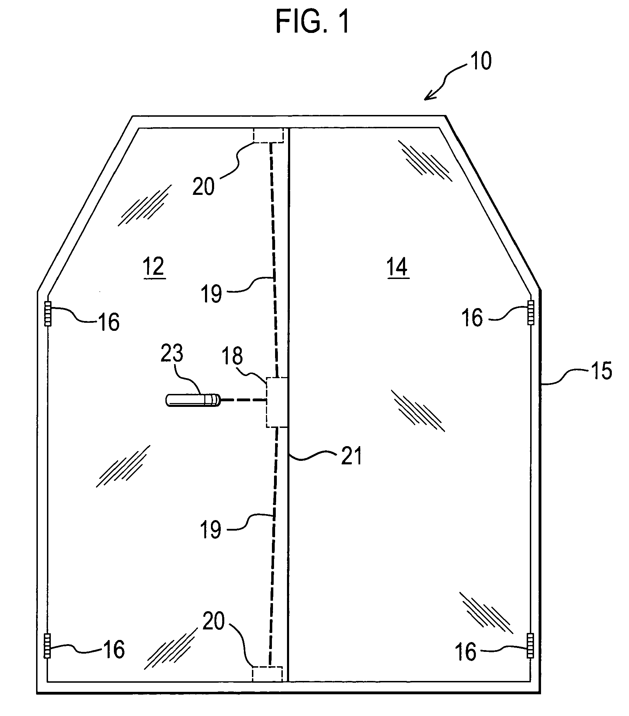

Referring to Figure 1A, a light commercial vehicle, such as a van, is indicated generally at 10. Only the rear of the van is visible and this comprises first and second rear doors 12 and 14 pivotally mounted to a door surround 15 by hinges 16. In use first door 12 is opened first, followed by door 14 in order to gain full access to the vehicle load area. A primary latch 18 is mounted proximate the shut-face of door 12 to engage and releaseably retain a complementary striker (not shown) provided on the opposed shut-face of door 14. Latch 18 is lockable to provide some protection from unauthorised access to the load space of the vehicle.

Linkages 19 in the form of Bowden cables extend from the top and bottom of latch 18 to connect the primary latch 18 with secondary latches 20 mounted proximate the top and bottom of door 12. The secondary latches 20 are positioned so as to engage complementary strikers (not shown) mounted to the door surround 15 of the vehicle 10. Thus, when the door 12 is closed it is latched to both door 14 and to door surround 15, thereby securely retaining both doors 12 and 14 in a closed position relative to surround 15. When latch 18 is unlocked, pulling on an outside release handle 23 simultaneously releases both primary latch 18 and secondary latches 20 (by virtue of Bowden cables 19).

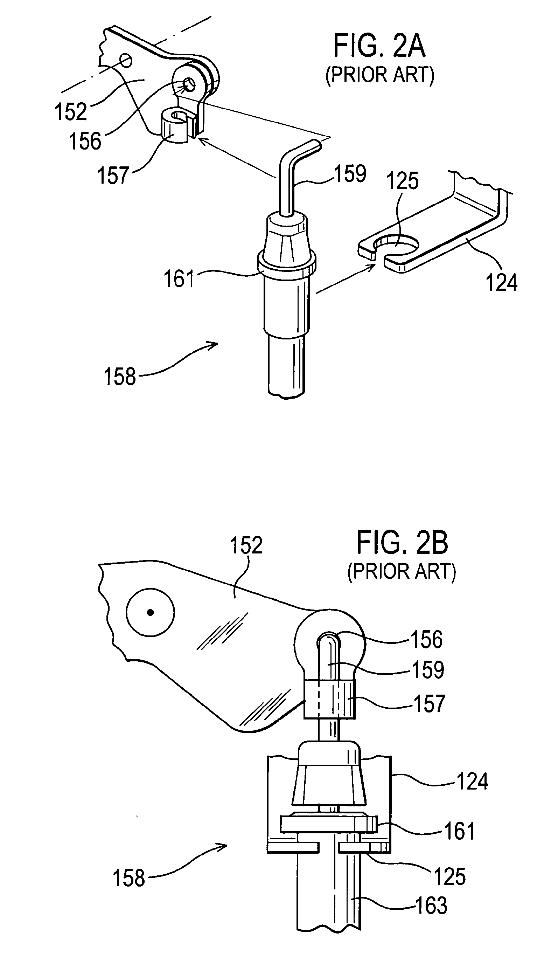

Turning to Figures 2A and 2B, a Bowden cable 158 with a prior art end fitting comprising an enlarged end 161 to the outer sheath 163 and an 'L' shaped end 159 to the inner cable. In order for a lever 152 to be actuated via the Bowden cable 158, the cable must be clipped in a first direction to a recess 125 of a fixed support 124 and also simultaneously clipped in a second direction to a 'C' shaped holder 157 at the end of the lever and inserted in a third direction into a hole 156 in the lever 152. It will therefore be appreciated that a significant degree of dexterity is required to successfully assemble a Bowden cable connection in this way, and that assembly in "blind" conditions would be near impossible.

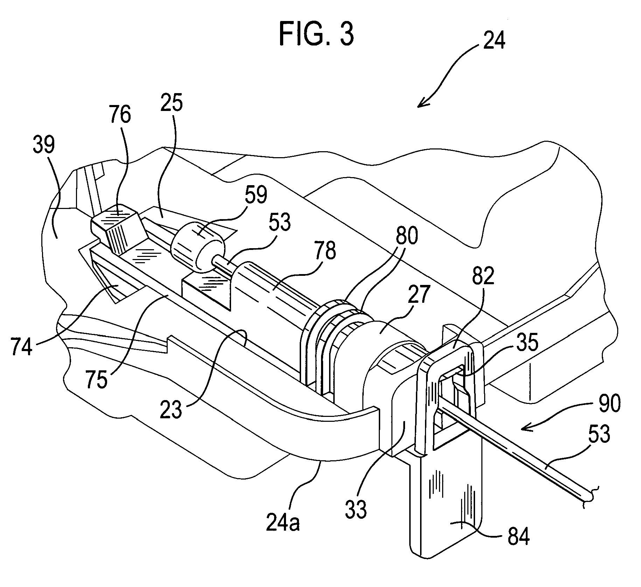

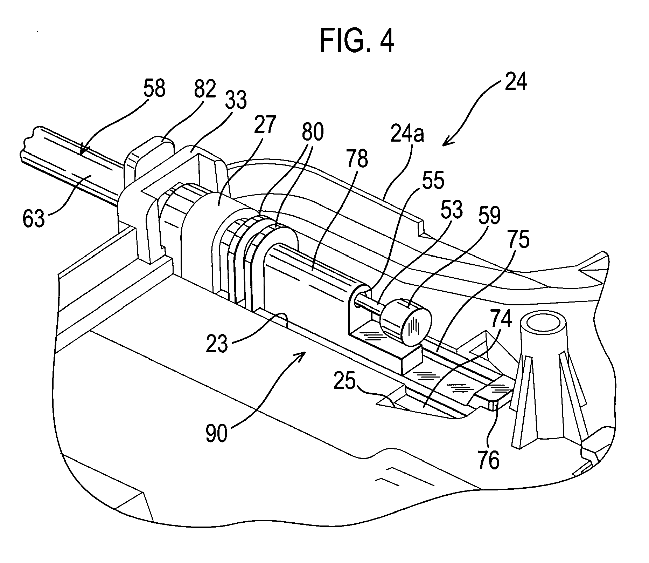

With reference to Figures 3 to 6, an end fitting 90 according to an embodiment of the present invention is illustrated in conjunction with a co-operating portion 24a of a latch housing 24 of latch 18.

It can be seen that the fitting 90 comprises a generally elongate substantially rigid body 75 formed from injection moulded plastics or the like.

From the free end of the body 75 inwards along a longitudinal axis of the body, the fitting 90 comprises a pivot portion in the form of an axially extending offset rib 76 provided so as to engage an edge of an interior face 39 of the housing 24a. A widened cover portion 74 is configured to contact an exterior face 37 of the housing 24a along the majority of the length of the fitting 90. A stop 86 projects from the cover portion 74. A cable guide portion 78 comprising an axial bore 55 and trough 57 is arranged to project into the interior of the housing and has a pair of retaining ribs 80 on its surface configured to maintain the fitting 90 in place in an axial direction. A clip portion in the form of clip 82 is arranged for an engagement with a tooth 35 of the housing (described in more detail below), and an unclip tab 84 projects away from the clip 82 and is in substantially axial alignment therewith.

A Bowden cable 58 enters the housing through an opening in the clip 82 and comprises an outer sheath 63 that terminates within the guide portion 78 and an inner cable 53 that extends through bore 55 of guide portion 78 and terminates in an enlarged end 59. The outer sheath is secured axially relative to the cable guide portion 78, by gluing, welding or crimping, for example. The inner cable 53 can slide axially relative to the fitting 90.

In addition, the housing portion 24a is configured for the securing of the fitting 90 thereto. In the same direction this comprises a guide 29 projecting from the outer face 37 of the housing with an enlarged mouth portion 31 to aid in the fitting of the offset rib 76. The interior face 39 of the housing proximate the guide 29 forms a pivot region engageable by the offset rib 76. An elongate aperture 23 extends from the mouth to the edge of the housing 24a, through which the body 75 of the fitting 90 is able to fit. A 'U' shaped retainer 27 extends transversely across aperture 23 and projects into the interior of the housing to maintain the fitting in place axially due to co-operation with rib 80. A clip region comprising a tooth 35 is mounted proximate and end opening 33 in the housing 24a and is positioned so as to co-operate with clip 82 and thus prevent the fitting 90 pivoting away from the housing 24a when assembled.

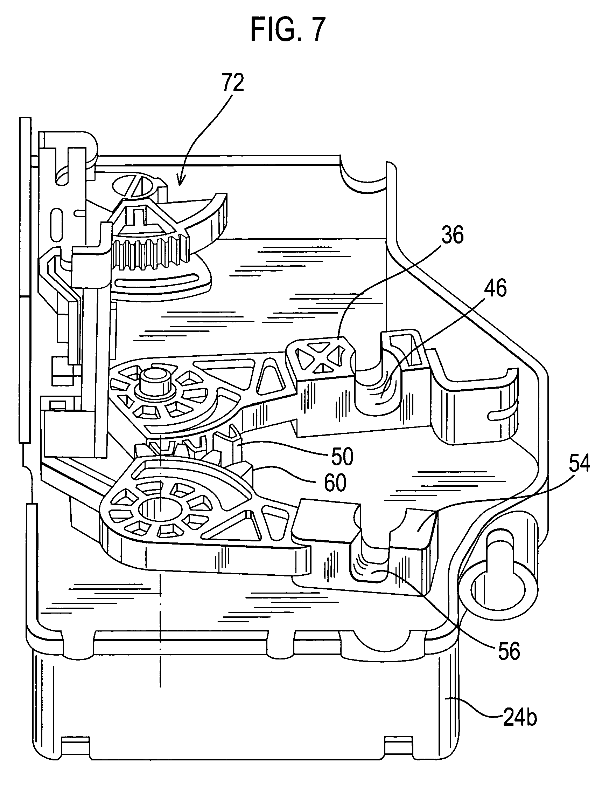

Figure 7 illustrates a second portion 24b of latch housing 24 that mates along its free edge with housing portion 24a and that additionally incorporates a latch mechanism indicated generally at 72. The mechanism comprises a pawl (not shown) configured to releaseably retain a claw-type latch bolt (not shown) and thus engage a striker (not shown) to hold the door closed, as is well known. The mechanism 72 further comprises first and second auxiliary latch release arms 54 and 36 comprising gear teeth 60 and 50 respectively so that motion of one arm results in simultaneous motion of the other arm in an opposite direction. The arms 54 and 36 are moveable in response to an action that also releases the striker from engagement with the latch bolt, be it a manual input from a door handle, or a power input from an electric motor or other actuator.

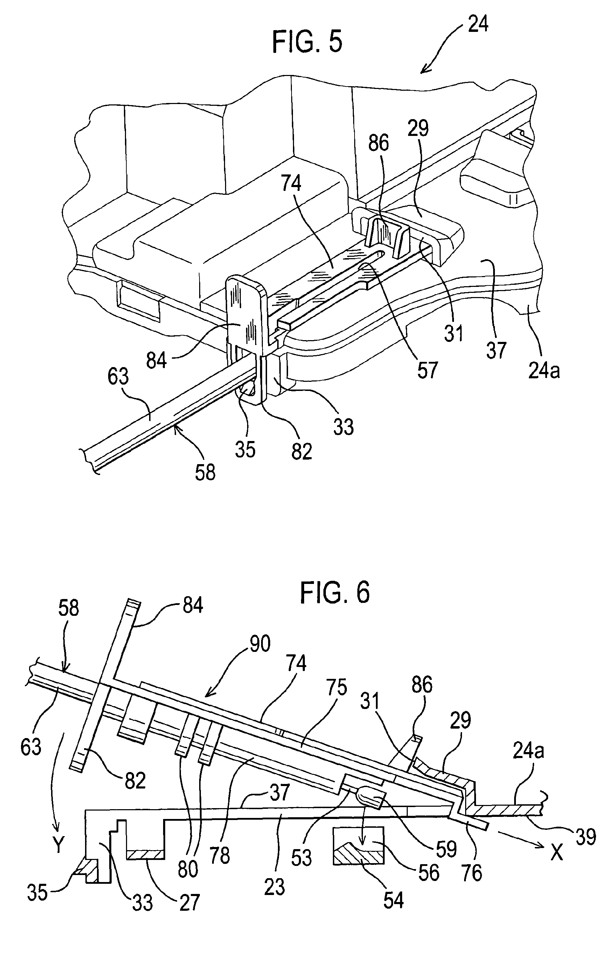

The first and second arms 54 and 36 each comprise a cup-shaped recess 56 proximate their free ends, dimensioned so that the enlarged end portion 59 of the inner cable 53 may engage therein and, in the case of first arm 54, anticlockwise motion thereof when viewed in Figure 7 results in axial motion of the inner cable 53 in a left to right direction when viewed in Figure 6.

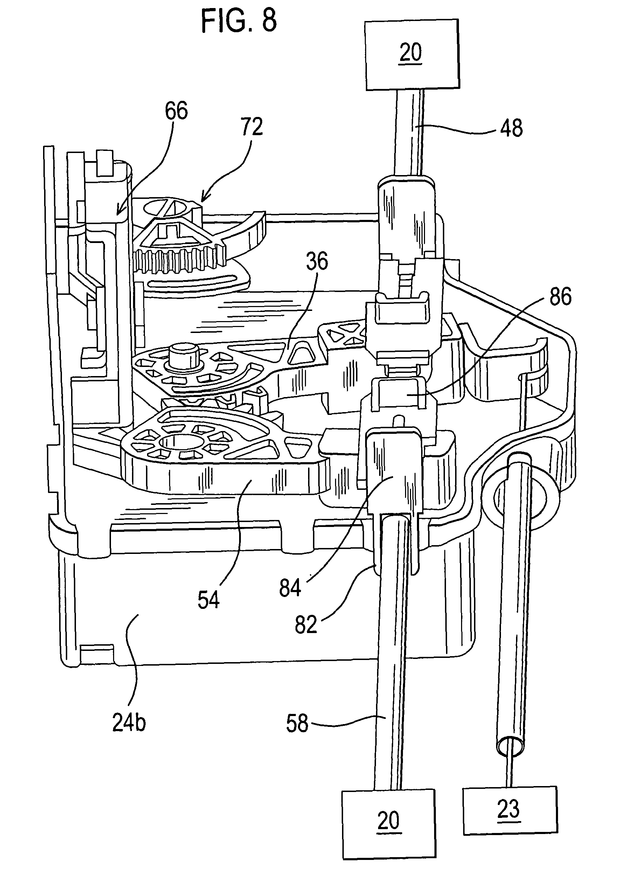

With particular reference to Figure 6, the fitting 90 is assembled to the latch 18 as follows:
Fitting 90 is first moved in direction X such that rib 76 engages the interior face 39 of housing 24a and stop 86 contacts the edge of opening 31 of the mouth 29, so that the fitting is positioned relative to the housing as illustrated in Figure 6. Guide 29 on the housing 24a assists in the correct location of the rib 76. It will be appreciated that stop 86 ensures the correct axial alignment of the fitting 90 relative to the housing 24a is achieved. Furthermore, rib 76 acts, in effect, as a pivot point for the subsequent step of pivoting the fitting 90 in an anticlockwise direction Y, so that clip 82 is brought into engagement with tooth 35, rib 80 is brought into the proximity of 'U' shaped retainer 27 and enlarged end 59 of the inner cable 53 is positioned in the recess 56 of arm 54. Additionally, the cover 74 of body portion 75 is brought into contact with the outer face 37 of cover 24a along the majority of the length of opening 23 to provide a seal against the ingress of dust, moisture etc. to the interior of the latch housing 24.
The fitting is shown in this installed position relative to housing 24a in Figures 3, 4 and 5, and furthermore relative to housing 24b and lever 54 in Figure 8. Figure 8 additionally illustrates a second Bowden cable 48 connected to a second auxiliary latch 20 in the same manner.

If removal of the fitting 90 from the housing 24a is needed, for example for maintenance reasons, tab 84 may be pushed in a clockwise direction when viewed in Figure 6, having the effect of disengaging clip 82 from tooth 35, thereby permitting the pivoting and axial withdrawal of the fitting 90 from the housing 24 and lever 54 in essentially the reverse of the assembly procedure.

It will be appreciated that the fitting described above enables cables to be connected to latches rapidly, and with the minimum amount of skill and dexterity. Disassembly of the fitting may also be easily achieved. Furthermore, the configuration of the fitting enables a good seal with the latch housing to be achieved, and ensures that the fitting is securely mounted to the housing so the two do not become separated in use.

It will further be appreciated that numerous changes may be made within the scope of the present invention and that a fitting of the present invention may be used in other applications when a cable, in particular a Bowden cable, needs to be fitted to an input or output element such as a lever. For example, a suitable alternative form of securement may be used in place of the tooth and clip arrangement, and the clip may be adapted so that the non-destructive disassembly of the fitting from a corresponding input or output is prevented. The shape of the enlarged end portion of the inner cable may be adapted according to particular user requirements. The stop rib may be dispensed with and the shape of the offset rib relied upon to prevent axial movement. The unclip tab may be dispensed with if provision for removal of the fitting is not required.

## Claims

1. An end fitting (90) for a cable (58) for the axial transmission of an input or output movement to or from a moveable body relative to a fixed body (24a), the end fitting having a pivot portion (76) spaced from a clip portion (82), the pivot portion being engageable with a pivot region (39) of the fixed body to allow the end fitting to rotate about the pivot portion to so as to rotatably engage the clip portion with a clip region (35) of the fixed body, thereby securing the cable to the fixed body.

2. An end fitting according to Claim 1 wherein the pivot portion further comprises an abutment (76) configured so as to engage the fixed body and restrict relative movement in at least one direction transverse the axis.

3. An end fitting according to Claim 1 or Claim 2 wherein the pivot portion further comprises an abutment (86) configured so as to engage the fixed body and restrict movement in at least one axial direction.

4. An end fitting according to any preceding claim wherein the clip region comprises a snap fitting clip (82) to automatically engage the fixed body by pivotal motion.

5. An end fitting according to Claim 4 further comprising a tab (84) manually operable to release the snap fitting clip.

6. An end fitting according to any preceding claim further comprising a cover portion (74) to inhibit ingress of foreign matter into the fixed body.

7. An end fitting according to any preceding claim configured to position the end (59) of the cable in the appropriate location for engagement with the moveable body (54) when in the fitted position.

8. An end fitting according to any preceding claim wherein the fitting is configured to receive an outer sheath (63) of the cable.

9. An end fitting according to Claim 8 wherein the fitting is configured to transmit axial loads in the sheath to the fixed body.

10. An end fitting assembly comprising an end fitting according to any preceding claim and a fixed body, wherein the fixed body is sheet-like and comprises an elongate aperture (23) to receive the fitting.

11. An end fitting assembly according to claim 10 wherein the fixed body comprises a guide (29) to guide the pivot portion into contact with the pivot region thereof.

12. A method of mounting a cable end fitting (90) to a fixed body (24a), the end fitting comprising a pivot portion (76) spaced from a clip portion (82), the method comprising the steps of:
a) engaging the pivot portion of the fitting with a complementary pivot region (39) of the fixed body;
b) pivoting the end fitting about the pivot portion; and
c) engaging the clip portion with the clip region (35) of the fixed body.

13. A method according to Claim 12 wherein in step (a) the end fitting is further restrained in at least one axial and/or one transverse direction relative to the fixed body.

14. A method according to Claim 12 or Claim 13 wherein in step (b) the cable is brought into engagement with a moveable body (54) such that axial movement is transmitted therebetween in at least one axial direction.

15. A method according to any one of Claims 12 to 14 wherein step (c) automatically occurs as a result of carrying out step (b).
